Europäisches Patentamt

European Patent Office

Office européen des brevets

(11) Veröffentlichungsnummer: **0 481 244 A1**

# EUROPÄISCHE PATENTANMELDUNG

(21) Anmeldenummer: **91116101.6**

(22) Anmeldetag: **21.09.91**

(51) Int. Cl.5: **F21Q 3/00, B60Q 1/26**

(30) Priorität: **17.10.90 DE 4032872**

(43) Veröffentlichungstag der Anmeldung:
**22.04.92 Patentblatt 92/17**

(84) Benannte Vertragsstaaten:
**AT CH DE ES FR GB IT LI SE**

(71) Anmelder: **ROBERT BOSCH GMBH**
**Postfach 30 02 20**
**W-7000 Stuttgart 30(DE)**

(72) Erfinder: **Weins, Walter, Dipl.-Ing.**
**Brennerstrasse 38**
**W-7016 Gerlingen(DE)**
Erfinder: **Reiser, Heinrich, Dipl.-Ing.**
**Finkenstrasse 2**
**W-7000 Stuttgart 1(DE)**
Erfinder: **Sanzenbacher, Rolf**
**Karl-Gärttner-Strasse 6**
**W-7120 Bietigheim(DE)**
Erfinder: **Eberle, Winfried**
**Finkenweg 5**
**W-7121 Cleebronn(DE)**
Erfinder: **Tucher, Siegfried**
**Kaiserslauterer Strasse 40**
**W-7000 Stuttgart 31(DE)**
Erfinder: **Blank, Erich**
**Hanfbachstrasse 5**
**W-7141 Möglingen(DE)**

(54) **Warnleuchte.**

(57) Es wird eine Warnleuchte mit einer ortsfest fixierten Lampe (16) vorgeschlagen, die in einem Reflektor (17) angeordnet ist. Weiterhin ist ein um eine Rotationsachse rotierender Umlenkspiegel (24) für das vom ortsfest fixierten Reflektor im wesentlichen parallel zur Rotationsachse abgestrahlte Lichtbündel vorgesehen. Der Umlenkspiegel wird von einem Elektromotor (29) angetrieben und lenkt ein von der Lampe (16) gespeistes Lichtbündel im wesentlichen rechtwinklig zur Rotationsachse ab. Durch die im ortsfest fixierten Reflektor angeordnete Lampe kann ein optimales Lichtbündel erzeugt werden, ohne daß Schleifkontakte erforderlich wären. Der rotierende Umlenkspiegel kann einfach und leicht ausgebildet werden, so daß die Anforderungen für die Antriebs- und Lagervorrichtung gering sind.

Fig. 1

EP 0 481 244 A1

## Stand der Technik

Die Erfindung betrifft eine Warnleuchte nach der Gattung des Hauptanspruches, wie sie beispielsweise in der DE-GM 84 27 524.3 beschrieben ist. Bei der bekannten Warnleuchte taucht eine ortsfest fixierte Lampe von unten her durch eine Ausnehmung in einen Reflektor ein, der ein horizontales Lichtbündel erzeugt. Dieser Reflektor ist motorisch angetrieben, so daß das Lichtbündel durch den Reflektor in einer horizontalen Ebene gedreht wird, wie dies beispielsweise bei Polizeifahrzeugen, Feuerwehrfahrzeugen, Fahrzeugen des technischen Hilfsdienstes usw. bekannt ist. Nachteilig an der bekannten Leuchte ist die relativ große Ausnehmung im Reflektor, um die Lampe von unten her, also senkrecht zur Abstrahlrichtung einzuführen. Darüberhinaus liegt bei Verwendung üblicher Glühbirnen keine punktförmige Lichtquelle vor, sondern die Wendel erstreckt sich über einen gewissen Bereich quer zur Abstahlrichtung. Dies führt zu einer nicht idealen Lichtverteilung im Lichtbündel.

Weiterhin ist eine Warnleuchte bekannt, bei der die Lampe fest im Reflektor angeordnet ist und zusammen mit diesem rotiert, um die vorstehend beschriebene Rotation des Lichtbündels um eine vertikale Achse zu erzielen. Bei dieser Anordnung ist infolge der größeren Masse des rotierenden Bereichs nicht nur eine aufwendigere und teurere Antriebs- und Lagervorrichtung erforderlich, sondern zur Stromzuführung der Lampe müssen auch Schleifkontakte vorgesehen sein, die ebenfalls teuer und aufwendig in der Herstellung sind. Darüberhinaus kann es durch Oberflächenkorrosion auf den Schleifkontakten zu Lampenausfällen kommen, so daß eine geringere Zuverlässigkeit zu befürchten ist.

## Vorteile der Erfindung

Die erfindungsgemäße Warnleuchte mit den kennzeichnenden Merkmalen des Hauptanspruches hat den Vorteil, daß die Lampe wie beim an zweiter Stelle genannten Stand der Technik fest im Reflektor zentral angeordnet ist, wobei die Glühwendel in Abstrahlrichtung ausgerichtet ist. Obwohl die Lampe daher eine optimale Anordnung im Reflektor aufweist, können Schleifkontakte vollständig entfallen, und es sind auch keine seitlichen Ausnehmungen im Reflektor erforderlich, wie dies beim zuerst genannten Stand der Technik der Fall ist. Da nur ein relativ leichter Umlenkspiegel rotiert, kann dessen Lager- und Antriebsmechanismus einfach und kostengünstig ausgebildet werden. Insgesamt wird daher bei guter Lichtabstrahlung eine gegenüber dem Stand der Technik einfachere und kostengünstigere Konstruktion möglich.

Durch die in den Unteransprüchen aufgeführten Maßnahmen sind vorteilhafte Weiterbildungen und Verbesserungen der im Hauptanspruch angegebenen Warnleuchte möglich. Im einfachsten Falle ist der Umlenkspiegel als Planspiegel ausgebildet, der im wesentlichen um 45° zur Rotationsachse geneigt ist. Es ist jedoch auch möglich, daß der Umlenkspiegel eine den Öffnungwinkel des vom Reflektor abgestrahlten Lichtbündels verändernde, insbesondere verringernde Wölbung aufweist und insgesamt um im wesentlichen 45° zur Rotationsachse geneigt ist. Hierdurch kann die Tiefe des Reflektors zur Erzeugung einer geringeren Bauhöhe reduziert werden und das dann gegebenenfalls nicht ausreichend gebündelte Lichtbündel kann dann ergänzend durch den Umlenkspiegel gebündelt werden.

Der Umlenkspiegel ist zweckmäßigerweise auf einem drehbar in einer Haltevorrichtung für den Reflektor gelagerten Lagerteil angebracht, das zur Lagerung insbesondere ein in die Haltevorrichtung eintauchendes Lagerrohrteil aufweisen kann, um eine einfache und stabile Lagerung zu erzielen.

Zur Erzielung eines einfachen Aufbaus mit wenigen Teilen weist das Lagerteil einen Antriebszahnkranz auf, in den ein Antriebszahnrad des an der Haltevorrichtung fixierten Elektromotors eingreift.

Um eine möglichst kompakte Bauweise zu gewährleisten, weist das Lagerteil zum Reflektor hin eine der Gestalt des Reflektors angepaßte kreiskegelartige Erweiterung zur berührungslosen Aufnahme des an der Haltevorrichtung fixierten Reflektors auf. Das Lagerteil dreht sich dadurch um den darin ortsfest fixierten Reflektor.

Zur Erhöhung der Stabilität und um Schwingungen zu vermeiden, ist der Umlenkspiegel durch ein Abstützelement am Lagerteil abgestützt. Dieses Abstützelement kann als wenigstens eine Abstütztstrebe ausgebildet sein oder der Umlenkspiegel ist an einem Stützrohr oder einer teilrohrartigen Stütze als Abstützelement nach Art einer Schrägschnittfläche angeordnet, wobei dieses Stützrohr bzw. diese teilrohrartige Stütze eine Austrittsöffnung für das Lichtbündel in radialer Richtung aufweist.

Zur Vereinfachung der Konstruktion kann der Umlenkspiegel und das Abstützelement einstückig ausgebildet sein und/oder auch der Umlenkspiegel und das Lagerteil können einstückig ausgebildet sein. Alternativ hierzu kann der Umlenkspiegel selbstverständlich auch auf das Lagerteil aufsteckbar ausgebildet sein. Als Material eignet sich vor allem Kunststoff.

Damit die Warnleuchte beispielsweise auch von Hubschraubern aus besser erkannt werden kann, weist der Umlenkspiegel Öffnungen oder Ausnehmungen für den Durchlaß eines Teils des Lichtbündels in Richtung der Rotationsachse auf, die im einsatzbereit montierten Zustand, beispielsweise auf einem Polizeifahrzeug, im wesentlichen vertikal verläuft. Alternativ hierzu ist es auch möglich, die Querschnittsfläche des Lichtbündels größer zu machen, als die Projektion des Umlenkspiegels auf diese Querschnittsfläche. Hierdurch kann ein Teil des Lichtbündels den Umlenkspiegel passieren, ohne umgelenkt zu werden.

Zeichnung

Ausführungbeispiele der Erfindung sind in der Zeichnung dargestellt und in der nachfolgenden Beschreibung näher erläutert. Es zeigen:

Figur 1     eine Schnittdarstellung eines ersten Ausführungsbeispiels einer Warnleuchte mit einem durch eine Abstützstrebe abgestützen Umlenkspiegel und

Figur 2     eine perspektivische Darstellung eines Umlenkspiegels, der durch eine rohrförmige Abstützung am Lagerteil befestigt ist als Teildarstellung eines zweiten Ausführungsbeispiels.

Beschreibung der Ausführungsbeispiele

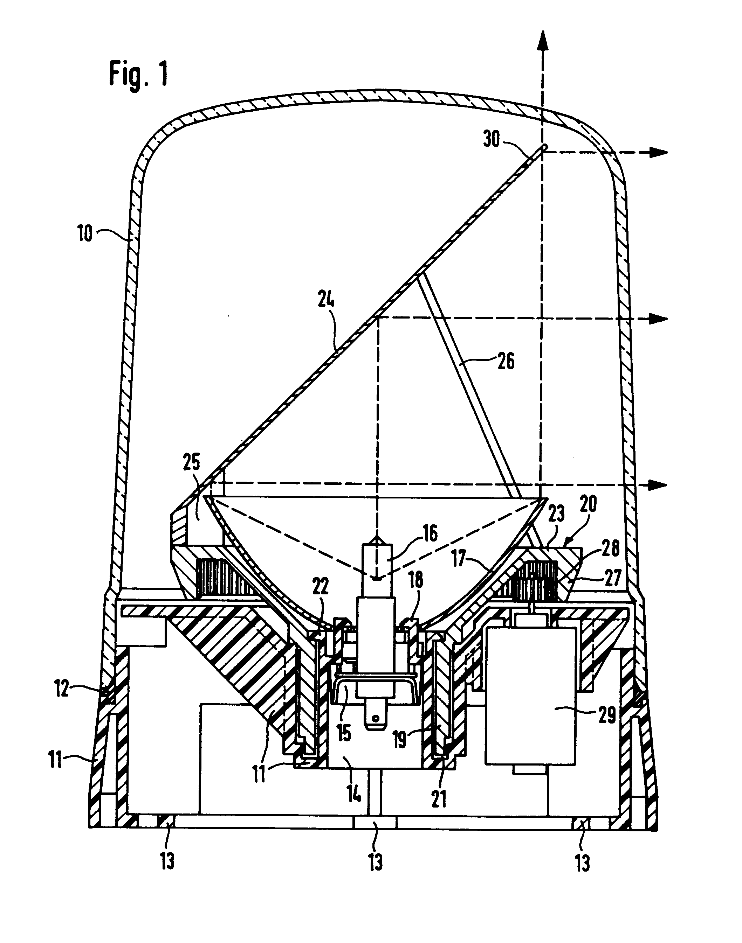

Bei dem in Figur 1 dargestellten ersten Ausführungsbeispiel ist ein topfförmiges, lichtdurchlässiges Gehäuse 10 auf einen Sockel 11 mittels einer Dichtung 12 dichtend aufgesteckt. Zur sicheren Befestigung können nicht dargestellte Schrauben, ein Bajonettverschluß, ein Schraubgewinde oder dergleichen dienen. Der Sockel 11 weist an seinem unteren Ende radial nach innen weisende Befestigungslaschen 13 auf, die zur Schraubbefestigung der Warnleuchte beispielsweise auf dem Fahrzeugdach eines Feuerwehrfahrzeuges, eines Polizeifahrzeuges oder des Fahrzeuges eines technischen Hilfsdienstes dienen. In Abhängigkeit der jeweiligen Anwendung ist das Gehäuse 10 meistens blau oder gelb eingefärbt.

Im mittleren Bereich des Sockels 11, der als Haltevorrichtung für die übrigen Teile der Warnleuchte dient, kann durch eine kreiszylindrische Ausnehmung 14 von unten her eine Fassung 15 für eine Glühlampe 16 eingesetzt werden. Hierbei handelt es sich um eine in der Kraftfahrzeugtechnik übliche Fassung und übliche Glühlampe, so daß auf eine detailliertere Beschreibung verzichtet werden kann. Im eingesetzten und verrasteten Zustand befindet sich die Fassung 15 in der kreiszylindrischen Ausnehmung 14, und die Glühlampe 16 ragt oben aus dem Sockel 11 heraus und in einen im wesentlichen parabolischen Reflektor 17 hinein, dessen Reflektoröffnung nach oben weist. Zur Fixierung des Reflektors 17 am Sockel 11 weist der Sockel 11 Rastnasen 18 auf, die beim Aufsetzen des Reflektors 17 auf den Sockel 11 durch Öffnungen deselben hindurchgreifen und den Reflektor 17 dann federnd verrasten.

Ein rohrförmiger Lagerbereich 19 eines Lagerteils 20 greift von oben her in eine entsprechend rohrförmig ausgebildete Lagerausnehmung 21 des Sockels 11 ein und bewirkt eine drehbare Lagerung des Lagerteils 10 um eine vertikale Rotationsachse. Zur axialen Fixierung des Lagerteils 20, also zur Verhinderung eines Herausfallens oder Herausgleitens des Lagerteils 20 aus der Lagerausnehmung 21 weist der Sockel 11 Rastnasen 22 auf, die beim Einstecken des Lagerteils 20 in einen Absatz des rohrförmigen Lagerbereichs 19 einrasten. Je nach Bedarf können selbstverständlich nicht dargestellte Wälzlager oder zustätzliche Gleitlager vorgesehen sein.

Vom oberen Ende des rohrförmigen Lagerbereichs 19 aus erweitert sich das Lagerteil 20 kreiskegelartig nach außen und mündet an einem kreisringförmigen Haltebereich 23 für einen Umlenkspiegel 24. Die kreiskegelartige Erweiterung des Lagerteils 20 ist dabei der Gestalt des Reflektors 17 im wesentlichen angepaßt und nimmt diesen auf, wobei ein geringer Zwischenabstand verbleibt, um Reibungen zu vermeiden.

Der Umlenkspiegel 24 ist unter einem Winkel von 45° zur Rotationsachse des Lagerteils 20 auf dem Haltebereich 23 mittels eines rohrbogenartigen Haltebereichs 25 am unteren Ende des Umlenkspiegels 24 befestigt. Zur Befestigung kann der Umlenkspiegel 24 bzw. der rohrbogenartige Haltebereich 25 mit dem Lagerteil 20 verklebt, verschraubt oder über eine Steckverbindung verbunden sein. Es ist auch möglich, den Umlenkspiegel 24 und das Lagerteil 20 einstückig auszubilden, beispielsweise als Kunststoffspritzteil.

Um Vibrationen, insbesondere Resonanzvibrationen des Umlenkspiegels 24 zu verhindern, ist dessen oberer Bereich über Abstützstreben 26 zusätzlich mit dem Haltebereich 23 des Lagerteils 20 verbunden. Falls konstruktionsbedingt keine Vibrationen zu befürchten sind, kann auf diese Abstützstreben 26 auch verzichtet werden.

Der Haltebereich 23 weist an seinem äußeren radialen Ende einen nach unten weisenden, ringförmigen Antriebsbereich 27 mit einer Innenverzahnung auf. Ein Zahnrad 28 eines von unten her in den Sockel 11 eingesetzten Elektromotors 29 ragt nach oben über den Sockel 11 hinaus und greift in die Innenverzahnung des Antriebsbereichs 27 ein, um das Lagerteil 20 mittels des Elektromotors 29 in eine rotierende Bewegung setzen zu können.

Die dargestellte Warnleuchte wird im Betrieb im allgemeinen so montiert, daß die vertikale Rotationsachse gemäß Figur 1 ebenfalls eine vertikale Achse darstellt. Durch den Reflektor 17 und die Glühlampe 16 wird ein vertikal nach oben abgestrahltes Lichtbündel erzeugt, das durch den Umlenkspiegel 24 im wesentlichen rechtwinkelig in eine horizontale Richtung abgelenkt wird. Der Strahlengang des Lichtbündels ist durch gestrichelte Linien dargestellt. Wird der Elektromotor 29 eingeschaltet, so rotiert das Lagerteil 20 und damit der Umlenkspiegel 24 um die vertikale Rotationsachse, so daß das Lichtbündel ebenfalls einen Kreis in einer horizontalen Ebene beschreibt, wie dies auch bei den bekannten Warnleuchten der Fall ist.

In Abwandlung des dargestellten Ausführungsbeispiels kann der Sockel 11 selbstverständlich ein- oder mehrstückig ausgebildet sein. Anstelle eines Zahnantriebes kann ein Reibradantrieb, ein Riemenantrieb oder ein Schneckenantrieb treten. Es ist auch beispielsweise möglich, daß der elektromotorische Antrieb am rohrförmigen Lagerbereich 19 angreift, so daß der Antriebsbereich 27 entfallen kann.

Damit ein mit einer derartigen Warnleuchte versehenes Fahrzeug auch beispielsweise von einem Hubschrauber aus erkannt werden kann, weist der Umlenkspiegel 24 eine randseitige Ausnehmung 30 an seinem oberen Ende auf, die einen kleinen Teil des vom Reflektor 17 abgestrahlten Lichtbündels vertikal nach oben durchläßt. Anstelle einer randseitigen Ausnehmung 30 können selbstverständlich auch Ausnehmungen innerhalb des Umlenkspiegels 24 treten oder der Reflektor 17 überlappt den Umlenkspiegel 24 in horizontaler Richtung, so daß ein Teil des Lichtbündels vom Umlenkspiegel 24 vertikal nach oben vorbeigeht.

Im dargestellten und beschriebenen Ausführungsbeispiel ist der Umlenkspiegel 24 als Planspiegel ausgebildet. Alternativ hierzu ist es auch möglich, den Umlenkspiegel 24 gewölbt auszubilden, so daß das vom Reflektor 17 kommende Lichtbündel zusätzlich durch den Umlenkspiegel 24 gebündelt wird. Hierdurch ist es möglich, den Reflektor 17 flacher auszubilden und dadurch die gesamte Bauhöhe zu verringern.

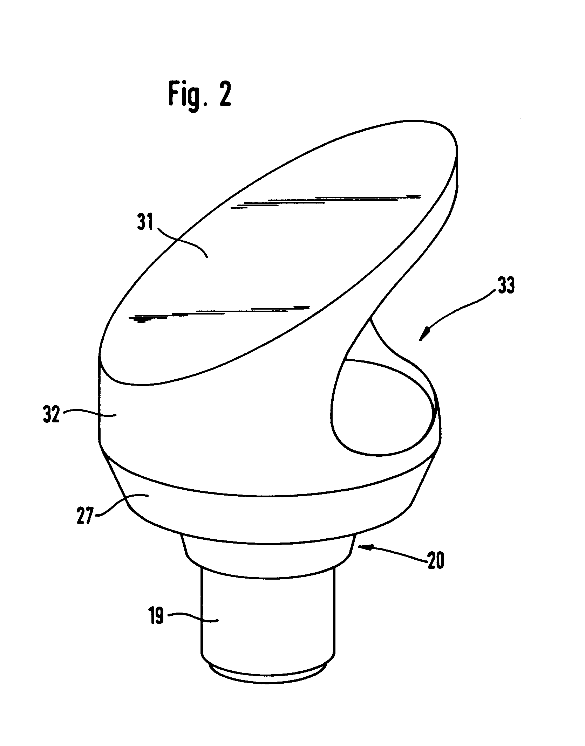

Bei dem in Figur 2 dargestellten zweiten Ausführungsbeispiel wird ein Umlenkspiegel 31 über ein Halte- und Stützrohr 32 am Lagerteil 20 befestigt. Dieses ist gemäß dem ersten Ausführungsbeispiel ausgebildet und wird daher nicht nochmals beschrieben. Der Umlenkspiegel 31 bildet dabei eine Schrägschnittfläche durch das Halte- und Stützrohr 32 bei einem Schnittwinkel von 45°. Zur horizontalen Abstrahlung des Lichtbündels weist das Halte- und Stützrohr 32 eine entsprechende seitliche Öffnung 33 auf. Auch hier kann der Umlenkspiegel 31 mit dem Halte- und Stützrohr 32 bzw. dem Lagerteil 20 einstückig ausgebildet sein und aus Kunststoff bestehen, wobei zur Bildung des Umlenkspiegels 31 eine Innenverspiegelung angebracht wird.

Der übrige Teil der Warnleuchte kann gemäß dem ersten Ausführungsbeispiel ausgebildet sein, d.h., das mit dem Umlenkspiegel 31 versehene Lagerteil 20 wird gemäß dem ersten Ausführungsbeispiel in den dort dargestellten und beschriebenen Sockel 11 eingesetzt und verrastet.

**Patentansprüche**

1. Warnleuchte mit einer ortsfest fixierten Lampe, die in einem Reflektor angeordnet ist, und mit um eine Rotationsachse rotierenden, von einem Elektromotor angetriebenen und ein von der Lampe gespeistes Lichtbündel im wesentlichen rechtwinkelig zur Rotationsachse abstrahlenden Mittel, dadurch gekennzeichnet, daß die Abstrahlrichtung des ortsfest fixierten Reflektors (17) im wesentlichen parallel zur Rotationsachse verläuft und daß die rotierenden Mittel als Umlenkspiegel (24; 31) für das vom Reflektor (17) abgestrahlte Lichtbündel ausgebildet sind.

2. Warnleuchte nach Anspruch 1, dadurch gekennzeichnet, daß der Umlenkspiegel (24; 31) als Planspiegel ausgebildet ist, der im wesentlichen um 45° zur Rotationsachse geneigt ist.

3. Warnleuchte nach Anspruch 1, dadurch gekennzeichnet, daß der Umlenkspiegel eine den Öffnungswinkel des vom Reflektor abgestrahlten Lichtbündels verändernde, insbesondere verringernde Wölbung aufweist und insgesamt um im wesentlichen 45° zur Rotationsachse geneigt ist.

4. Warnleuchte nach Anspruch 2 oder 3, dadurch gekennzeichnet, daß der Umlenkspiegel (24; 31) auf einem drehbar in einer Haltevorrichtung (11) für den Reflektor (17) gelagerten Lagerteil (20) angebracht ist.

5. Warnleuchte nach Anspruch 4, dadurch gekennzeichnet, daß das Lagerteil (20) ein in die Haltevorrichtung (11) eintauchendes Lagerrohrteil (19) aufweist.

6. Warnleuchte nach Anspruch 4 oder 5, dadurch gekennzeichnet, daß das Lagerteil (20) einen Antriebszahnkranz (27) aufweist, in den ein Antriebszahnrad (28) des an der Haltevorrichtung (11) fixierten Elektromotors (29) eingreift.

7. Warnleuchte nach einem der Ansprüche 4 bis 6, dadurch gekennzeichnet, daß das Lagerteil (20) zum Reflektor (17) hin eine der Gestalt des Reflektors (17) angepaßte kreiskegelartige Erweiterung zur berührungslosen Aufnahme des an der Haltevorrichtung (11) fixierten Reflektors (17) aufweist.

8. Warnleuchte nach einem der Ansprüche 4 bis 7, dadurch gekennzeichnet, daß die Haltevorrichtung (11) Rastvorrichtungen (18, 22) zur verrastenden Fixierung des Reflektors (17) und/oder zur axialen Verrastung des Lagerteils (20) aufweist.

9. Warnleuchte nach einem der Ansprüche 4 bis 8, dadurch gekennzeichnet, daß der Umlenkspiegel (24; 31) durch ein Abstützelement (26; 32) am Lagerteil (20) abgestützt ist.

10. Warnleuchte nach Anspruch 9, dadurch gekennzeichnet, daß als Abstützelement (26) wenigstens eine Abstützstrebe vorgesehen ist.

11. Warnleuchte nach Anspruch 9, dadurch gekennzeichnet, daß der Umlenkspiegel (31) an einem Stützrohr oder teilrohrartigen Stütze als Abstützelement (32) nach Art einer Schrägschnittfläche angeordnet ist und daß das Stützrohr oder die teilrohrartige Stütze eine Austrittsöffnung (33) für das Lichtbündel in radialer Richtung aufweist.

12. Warnleuchte nach einem der Ansprüche 9 bis 11, dadurch gekennzeichnet, daß der Umlenkspiegel (24; 31) und das Abstützelement (26; 32) einstückig ausgebildet sind.

13. Warnleuchte nach einem der Ansprüche 4 bis 12, dadurch gekennzeichnet, daß der Umlenkspiegel (24; 31) und das Lagerteil (20) einstückig ausgebildet sind.

14. Warnleuchte nach einem der Ansprüche 4 bis 12, dadurch gekennzeichnet, daß der Umlenkspiegel (24; 31) auf das Lagerteil (20) aufsteckbar ausgebildet ist.

15. Warnleuchte nach einem der Ansprüche 4 bis 14, dadurch gekennzeichnet, daß der Umlenkspiegel (24; 31) und/oder das Lagerteil (20) und/oder das Abstützelement (26; 32) aus Kunststoff bestehen.

16. Warnleuchte nach einem der vorhergehenden Ansprüche, dadurch gekennzeichnet, daß der Umlenkspiegel (24) Öffnungen oder Ausnehmungen (30) für den Durchlaß eines Teils des Lichtbündels in Richtung der Rotationsachse aufweist.

17. Warnleuchte nach einem der vorhergehenden Ansprüche, dadurch gekennzeichnet, daß die Querschnittsfläche des Lichtbündels größer als die Projektion des Umlenkspiegels auf diese Querschnittsfläche ist.

18. Warnleuchte nach einem der vorhergehenden Ansprüche, dadurch gekennzeichnet, daß die Rotationsachse im einsatzbereit montierten Zustand der Warnleuchte im wesentlichen vertikal verläuft.

**Fig. 1**

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 266 014 (LEOTTA) <br> * das ganze Dokument * * | 1,2,18 | F 21 Q 3/00 <br> B 60 Q 1/26 |
| A | | 4,6,9,11, 14 | |
| | – – – | | |
| X | GB-A-1 346 852 (LASER ELECTRONICS PTY. LTD.) <br> * das ganze Dokument * * | 1,2,18 | |
| | – – – | | |
| X | FR-A-706 596 (SVENSKA AKTIEBOLAGET GASACCUMU-LATOR) | 1,2,18 | |
| A | ( ) <br> * Seite 2, Zeile 47 - Zeile 80; Abbildung 3 * * | 3 | |
| | – – – | | |
| A | DE-C-846 139 (SIEMENS SCHUCKERTWERKE AG , BERLINUND ERLANGEN) <br> * Seite 2, Zeile 62 - Zeile 72; Abbildung 1 * * | 16,17 | |
| | – – – – – | | |

|  |
|---|
| **RECHERCHIERTE SACHGEBIETE (Int. Cl.5)** |
| F 21 Q <br> B 60 Q |

**Der vorliegende Recherchenbericht wurde für alle Patentansprüche erstellt**

| Recherchenort | Abschlußdatum der Recherche | Prüfer |
|---|---|---|
| Den Haag | 10 Januar 92 | VAN OVERBEEKE J.J. |